# FASCICULE DE BREVET EUROPEEN

(11) **EP 0 346 218 B1**
(45) Date de publication et mention de la délivrance du brevet: **20.10.1993**
(21) Numéro de dépôt: 89401565.0
(22) Date de dépôt: 06.06.1989
(51) Int. Cl.: C01B 17/04

(54) **Procédé pour améliorer le rendement en soufre d'un ensemble de production de soufre à partir d'un gaz acide renfermant H2S, ledit ensemble comportant une usine à soufre suivie d'une unité d'épuration**
Verfahren zur Verbesserung der Schwefelausbeute einer Anlage zur Erzeugung von Schwefel aus Schwefelwasserstoff, enthaltend saures Gas, wobei einer Schwefelerzeugungsanlage eine Reinigungseinheit folgt
Process for modifying the sulphur yield of a plant producing sulphur from an acid gas containing hydrogen sulphide, whereby a sulphur production plant is followed by a purification unit

(30) Priorité: 08.06.1988 FR 8807649
(43) Date de publication de la demande: 13.12.1989
(73) Titulaire: ELF AQUITAINE PRODUCTION, 92400 Courbevoie (FR)
(72) Inventeur: Kvasnikoff, Georges, F-64360 Monein (FR); Philippe, André, F-64300 Orthez (FR); Voirin, Robert, F-64300 Orthez (FR)
(74) Mandataire: Boillot, Marc

(56) Documents cités:
- EP-A- 0 218 302
- CA-A- 975 534
- FR-A- 2 368 439
- FR-A- 2 538 716

## Description

L'invention concerne un procédé pour améliorer le rendement en soufre d'un ensemble de production de soufre à partir d'un gaz acide renfermant H₂S, ledit ensemble comportant une usine à soufre suivie d'une unité d'épuration.

La production de soufre à partir d'un gaz acide renfermant H₂S est généralement mise en oeuvre dans ce qu'il est convenu d'appeler une usine à soufre, c'est-à-dire dans une installation dans laquelle on introduit ledit gaz acide ainsi qu'une quantité contrôlée d'un gaz renfermant de l'oxygène libre et l'on effectue une oxydation ménagée de l'H₂S du gaz acide au moyen de l'oxygène du gaz renfermant de l'oxygène libre pour produire du soufre et en sortie de laquelle on évacue un gaz résiduaire renfermant de la vapeur d'eau et, en quantité globale comprise entre 0,2 et 4 % en volume, des composés soufrés incluant H₂S, SO₂ et du soufre vapeur et/ou vésiculaire. Dans la plupart des usines à soufre on réalise l'oxydation ménagée de l'H₂S du gaz acide pour produire un effluent gazeux renfermant H₂S et SO₂ et éventuellement du soufre élémentaire et l'on fait passer ledit effluent gazeux, après séparation du soufre qu'il peut contenir par condensation, au contact d'un catalyseur CLAUS disposé dans une ou plusieurs zones d'oxydation catalytique opérant à des températures supérieures au point de rosée du soufre contenu dans l'effluent pour former une nouvelle quantité de soufre par réaction entre H₂S et SO₂, ledit soufre étant séparé par condensation.

Fréquemment les composés soufrés présents dans le gaz résiduaire issu de l'usine à soufre comprennent au moins l'un des dérivés COS et CS₂ en plus d'H₂S et SO₂. Ces dérivés COS et CS₂ peuvent préexister dans la charge de gaz acide renfermant H₂S amenée à l'usine à soufre ou/et être formés au cours de l'oxydation de l'H₂S en soufre du fait de la présence de CO₂ et/ou d'hydrocarbures dans le gaz acide.

Le gaz résiduaire évacué de l'usine à soufre est couramment traité pour abaisser au maximum sa teneur globale en composés soufrés dans le but de permettre son rejet à l'atmosphère, après l'avoir incinéré, en respectant les normes imposées par la législation en matière de pollution et simultanément de récupérer ces composés soufrés sous une forme contribuant à augmenter le rendement en produits valorisables obtenus à partir du gaz traité dans l'usine à soufre.

Dans diverses techniques développées pour le traitement d'un gaz résiduaire d'usine à soufre, ledit gaz résiduaire, présentant une température inférieure à 160°C, est amené dans une unité d'épuration dans laquelle les composés H₂S et SO₂ présents dans le gaz résiduaire réagissent entre eux pour former du soufre, ladite réaction étant effectuée à une température inférieure au point de rosée du soufre formé, et en sortie de laquelle on obtient un gaz résiduaire épuré que l'on rejette à l'atmosphère, après lui avoir fait subir une incinération.

Dans de telles techniques d'épuration, les composés organiques du soufre COS et CS₂ ne sont pratiquement pas retenus dans l'unité d'épuration et se retrouvent tout ou partie dans le gaz résiduaire épuré dirigé vers l'incinération, ce qui occasionne des pertes en soufre non négligeables qui limitent le rendement en soufre de l'ensemble formé de l'usine à soufre et de l'unité d'épuration à des valeurs d'environ 99 %, les pertes en soufre résultant du passage à l'incinération des composés COS et CS₂ représentant une fraction du rendement en soufre dudit ensemble pouvant varier d'environ 0,1 à 0,5 %.

Le document EP-A-0 218 302 propose un procédé qui permet d'améliorer le rendement en soufre de l'ensemble précité en effectuant tout d'abord une conversion quasi-totale des composés COS et CS₂ en H₂S par réaction d'hydrolyse, avant une première étape d'épuration pour éliminer le SO₂ résiduel suivant la réaction :

2 H₂S + SO₂ → 3 S + 2 H₂O,

suivie par une conversion du H₂S en excès en soufre dans une deuxième étape d'épuration, ceci après addition d'oxygène nécessaire pour la conversion.

L'invention se propose de simplifier ce procédé en s'affranchissant de la seconde unité d'épuration.

Le procédé selon l'invention pour améliorer le rendement en soufre d'un ensemble produisant du soufre à partir d'un gaz acide renfermant H₂S, ledit ensemble comportant, d'une part, une usine à soufre, dans laquelle on introduit ledit gaz acide ainsi qu'une quantité contrôlée d'un gaz renfermant de l'oxygène libre et l'on effectue une oxydation ménagée de l'H₂S du gaz acide au moyen de l'oxygène du gaz renfermant de l'oxygène libre pour produire du soufre et en sortie de laquelle on évacue un gaz résiduaire renfermant de la vapeur d'eau et, en quantité globale comprise entre 0,2 et 4 % en volume, des composés soufrés comprenant H₂S, SO₂ et au moins l'un des dérivés COS et CS₂, et, d'autre part, une unité d'épuration, dans laquelle on fait passer ledit gaz résiduaire et amène les composés H₂S et SO₂ qu'il renferme à réagir entre eux pour former du soufre, ladite réaction étant effectuée à une température inférieure au point de rosée du soufre formé, et obtenir en sortie de ladite unité un gaz résiduaire épuré, ledit procédé étant du type dans lequel on produit le gaz résiduaire introduit dans l'unité d'épuration en mettant en contact le gaz résiduaire issu de l'usine à soufre avec un catalyseur d'hydrolyse des composés COS et CS₂ en H₂S opérant à une température suffisante pour produire un gaz résiduaire hydrolysé renfermant H₂S et SO₂ et substantiellement exempt de COS et CS₂ et en amenant le gaz résiduaire hydrolysé à la température requise pour son passage dans l'unité d'épuration et se caractérisant en ce que l'on maintient à la valeur 2 : 1 le rapport molaire H₂S:SO₂ dans le gaz résiduaire hydrolysé introduit dans ladite unité d'épuration en faisant varier le rapport des débits de gaz acide et de gaz renfermant de l'oxygène libre introduits dans l'usine à soufre.

Avantageusement, la température de mise en oeuvre de la réaction d'hydrolyse des composés COS et CS₂ est comprise entre 180°C et 400°C, ladite température étant de préférence choisie entre 250°C et 350°C.

Le temps de séjour du gaz résiduaire issu de l'usine à soufre au contact du catalyseur d'hydrolyse peut être compris entre 0,5 et 10 secondes et en particulier aller de 1 à 5 secondes, ces valeurs étant données dans les conditions standards de pression et de température.

Les catalyseurs utilisables pour promouvoir la réaction d'hydrolyse peuvent être choisis parmi les divers catalyseurs susceptibles de remplir cette fonction et sans action sur les composantes du gaz résiduaire.

On peut en particulier utiliser des catalyseurs à base d'alumine, c'est-à-dire formés d'un matériau renfermant, en poids, au moins 50 % et avantageusement au moins 90 % d'alumine activée, et notamment des catalyseurs consistant en alumines activées choisies parmi les alumines activées utilisées pour promouvoir la réaction de CLAUS entre H₂S et SO₂ donnant du soufre. On peut encore utiliser pour l'hydrolyse des catalyseurs résultant de l'association d'au moins un composé de métal choisi parmi Fe, Ni, Co, Cu, Zn, Cr et Mo avec un support d'alumine ou/et de silice, tels que ceux décrits dans la citation FR-A-2 327 960. Les catalyseurs d'hydrolyse à base d'alumine ont avantageusement des surfaces spécifiques, mesurées par la méthode d'absorption d'azote dite méthode BET, allant de 100 m²/g à 400 m²/g et de préférence de 150 m²/g à 350 m²/g et des volumes poreux totaux, déterminés par la méthode de pénétration au mercure, compris entre 0,1 et 1,2 cm³/g et de préférence entre 0,3 et 1 cm³/g.

Conviennent également comme catalyseurs d'hydrolyse, les catalyseurs contenant de l'oxyde de titane et en particulier les catalyseurs consistant en oxyde de titane ou bien les catalyseurs renfermant un mélange d'oxyde de titane et d'un sulfate d'un métal alcalino-terreux choisi parmi calcium, strontium, baryum et magnésium ou encore les catalyseurs à base d'oxyde de titane et d'un support tel qu'alumine, silice ou zéolithe. Dans les catalyseurs à base d'oxyde de titane et d'un sulfate d'un métal alcalino-terreux, le rapport de la proportion pondérale d'oxyde de titane, exprimée en TiO₂, à la proportion pondérale de sulfate alcalino-terreux dans le catalyseur calciné peut aller de 99 : 1 à 60 : 40 et de préférence de 99 : 1 à 80 : 20. Les catalyseurs d'hydrolyse à base d'oxyde de titane ont avantageusement des surfaces spécifiques, mesurées par la méthode BET, comprises entre 5 et 300 m²/g et de préférence entre 10 et 250 m²/g et des volumes poreux totaux, déterminés par la méthode de pénétration au mercure, compris entre 0,05 et 0,6 cm³/g et de préférence entre 0,1 et 0,4 cm³/g. Des catalyseurs renfermant de l'oxyde de titane peuvent être obtenus comme décrit dans la citation FR-A-2 481 145. Pour obtenir des catalyseurs renfermant de l'oxyde de titane et un sulfate de métal alcalino-terreux, on peut faire appel à l'une ou l'autre des techniques de préparation enseignées par la citation EP-A-0060741.

Pour amener le gaz résiduaire hydrolysé jusqu'à la température requise pour son passage dans l'unité d'épuration, on peut opérer avantageusement par échange indirect de chaleur avec un fluide ayant une température appropriée.

Le maintien du rapport molaire H₂S : SO₂ à la valeur 2 : 1 dans le gaz résiduaire hydrolysé amené à l'unité d'épuration peut être réalisé en faisant appel aux diverses méthodes de régulation connues pour maintenir le rapport molaire H₂S : SO₂ à la valeur 2 : 1 dans les gaz résiduaires d'une usine à soufre par variation du rapport des débits de gaz acide et de gaz renfermant de l'oxygène libre introduits dans l'usine à soufre, ladite variation étant avantageusement effectuée en maintenant constant le débit de gaz acide amené à l'usine à soufre et en faisant varier le débit de gaz renfermant de l'oxygène libre. Dans la plupart de ces méthodes de régulation, on effectue une analyse d'un échantillon du gaz résiduaire pour en déterminer les teneurs molaires en H₂S et SO₂ et produire à partir desdites teneurs une grandeur représentative de la valeur instantanée du rapport molaire H₂S : SO₂ dans le gaz résiduaire, puis on élabore une grandeur représentative du débit de correction du gaz renfermant de l'oxygène libre pour ramener ladite valeur instantanée du rapport molaire H₂S : SO₂ à la valeur 2 : 1 et l'on utilise la grandeur ainsi élaborée pour ajuster le débit du gaz renfermant de l'oxygène libre introduit dans l'usine à soufre, cet ajustement de débit étant opéré soit sur la totalité du débit de gaz renfermant de l'oxygène libre ou seulement sur un débit additionnel faible s'ajoutant à un débit principal plus important et proportionnel à la quantité d'H₂S présent dans le gaz acide. La technique d'analyse de l'échantillon de gaz résiduaire mise en oeuvre dans ces méthodes de régulation peut être, par exemple, une technique d'analyse par chromatographie en phase gazeuse (US-A-3 026 184 et FR-A-2 118 365), une technique d'analyse par absorption dans l'ultra-violet (THE OIL AND GAS JOURNAL, 10 Août 1970, pages 155 à 157) ou encore une technique d'analyse par spectrométrie interférentielle (FR-A-2 420 754).

Le gaz renfermant de l'oxygène libre, que l'on introduit dans l'usine à soufre pour effectuer l'oxydation ménagée de l'H₂S du gaz acide, est généralement de l'air bien qu'il soit possible d'employer de l'oxygène pur ou encore de l'air enrichi en oxygène ou même des mélanges, en proportions variées, d'oxygène et d'un ou plusieurs gaz inertes autres que l'azote.

Dans le procédé selon l'invention, on désigne par usine à soufre toute installation dans laquelle on introduit le gaz acide renfermant H₂S ainsi qu'une quantité contrôlée d'un gaz contenant de l'oxygène libre et effectue une oxydation ménagée de l'H₂S du gaz acide par l'oxygène du gaz renfermant de l'oxygène libre pour produire du soufre et en sortie de laquelle on évacue également un gaz résiduaire ayant les caractéristiques définies précédemment. En particulier, l'usine à soufre peut être une usine à soufre CLAUS dans laquelle on effectue une combustion d'une fraction de l'H₂S du gaz acide dans une zone de combustion fonctionnant à température élevée pour produire un effluent gazeux renfermant H₂S et SO₂ et éventuellement du soufre élémentaire et l'on fait ledit effluent gazeux, après séparation du soufre qu'il peut contenir par condensation, au contact d'un catalyseur CLAUS disposé dans une ou plusieurs zones d'oxydation catalytique opérant à des températures supérieures au point de rosée du soufre contenu dans l'effluent pour former une nouvelle quantité de soufre par réaction entre H₂S et SO₂, ledit soufre étant séparé par condensation après chaque étape catalytique. Dans une telle usine à soufre CLAUS, la combustion partielle de l'H₂S du gaz acide pour former l'effluent renfermant H₂S et SO₂ est réalisée à des températures comprises entre 900°C et 1600°C et la réaction entre H₂S et SO₂ au contact du catalyseur CLAUS opérant à des températures supérieures au point de rosée du soufre contenu dans le milieu réactionnel est effectuée à des températures comprises entre 180°C et 450°C dans au moins une zone catalytique et de préférence dans une pluralité de zones catalytiques disposées en série. Dans ce dernier cas, les températures de fonctionnement des différentes zones catalytiques vont en décroissant d'une zone catalytique à la suivante. Après chacune des phases de réaction, le soufre produit contenu dans le milieu réactionnel est séparé par condensation et le milieu réactionnel substantiellement débarrassé du soufre est réchauffé jusqu'à la température choisie pour la phase subséquente de réaction. La température du gaz résiduaire issu de l'usine à soufre correspond sensiblement à la température à laquelle le milieu réactionnel produit au cours de la dernière phase de réaction dans l'usine à soufre a été refroidi pour condenser le soufre qu'il contient, ladite température étant généralement comprise entre 120°C et 160°C.

L'unité d'épuration dans laquelle on traite le gaz résiduaire hydrolysé peut consister en toute installation permettant de produire du soufre par réaction entre H₂S et SO₂ mise en oeuvre à une température inférieure au point de rosée du soufre formé et d'obtenir un gaz résiduaire épuré substantiellement exempt de composés soufrés tels que SO₂ et H₂S. L'unité d'épuration peut être en particulier une unité d'épuration catalytique dans laquelle le gaz résiduaire hydrolysé, présentant une température inférieure à 160°C, est mis en contact avec un catalyseur CLAUS pour former du soufre par réaction entre H₂S et SO₂, ledit contact étant réalisé à une température suffisamment basse pour que le soufre formé se dépose sur le catalyseur, le catalyseur chargé de soufre étant périodiquement soumis à une régénération par balayage au moyen d'un gaz non-oxydant entre 200°C et 500°C pour vaporiser le soufre qu'il retient, puis à un refroidissement au moyen d'un gaz inerte à température inférieure à 160°C jusqu'à la température requise pour une nouvelle mise en contact avec le gaz résiduaire. Des exemples d'unités d'épuration catalytique fonctionnant comme indiqué ci-dessus sont notamment décrites dans les citations FR-A-2 180 473 et FR-A-2 224 196.

La température à laquelle est réalisée la réaction de formation de soufre entre H₂S et SO₂ dans l'unité d'épuration, qui doit être inférieure au point de rosée du soufre formé, est généralement inférieure à 180°C et se situe avantageusement entre 100°C et 160°C.

Le gaz résiduaire épuré sortant de l'unité d'épuration est généralement soumis à une incinération thermique ou catalytique, pour transformer en SO₂ tous les composés du soufre qu'il peut encore renfermer en très faible quantité globale, avant d'être envoyé à l'atmosphère. L'hydrolyse selon l'invention des composés COS et CS₂ avant l'unité d'épuration facilite l'incinération thermique ou catalytique du gaz résiduaire épuré issu de ladite unité. En effet ledit gaz épuré ne renfermant plus de COS ni de CS₂, son incinération peut être réalisée à des températures plus basses, ce qui s'accompagne d'une économie du gaz combustible nécessaire à cette incinération.

Le catalyseur utilisé dans l'usine à soufre CLAUS de même que le catalyseur employé dans l'unité d'épuration catalytique faisant appel à un catalyseur CLAUS peuvent être choisis parmi les produits tels que bauxite, alumine, silice, zéolithes naturelles ou synthétiques, qui sont couramment utilisés pour promouvoir la réaction de formation de soufre entre H₂S et SO₂.

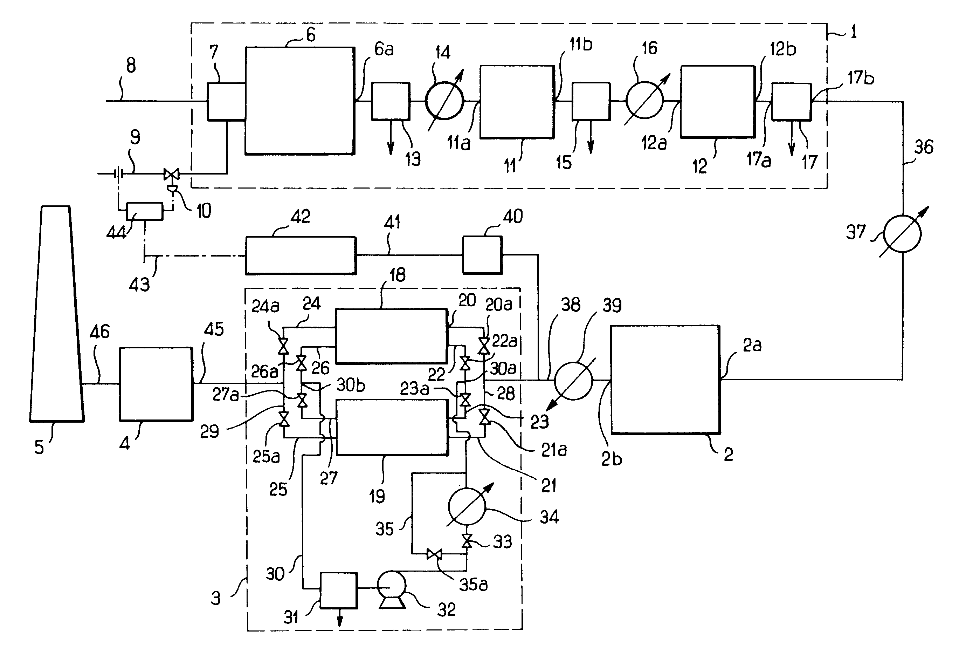

L'invention sera mieux comprise à la lecture de la description donnée ci-après de l'une de ses formes de réalisation utilisant l'installation représentée sur la figure du dessin annexé.

Cette installation associe en série une usine à soufre CLAUS 1, un réacteur 2 d'hydrolyse, une unité 3 d'épuration catalytique et un incinérateur 4 relié à une cheminée 5.

L'usine à soufre 1 comprend, d'une part, une chambre de combustion 6, qui comporte un brûleur 7 pourvu d'un conduit 8 d'amenée du gaz acide et d'un conduit 9 d'amenée d'air, ce dernier conduit étant équipé d'une vanne 10 à ouverture réglable, et qui présente une sortie 6a pour les gaz, et, d'autre part, un premier convertisseur catalytique 11 et un deuxième convertisseur catalytique 12, qui comportent chacun une entrée, respectivement 11a et 12a, et une sortie, respectivement, 11b et 12b, séparées par un lit fixe d'un catalyseur CLAUS. La chambre de combustion 6 et les convertisseurs catalytiques 11 et 12 sont montés en série de telle sorte que la sortie 6a de la chambre de combustion soit reliée à l'entrée 11a du premier convertisseur 11 à travers un premier condenseur à soufre 13 puis un premier réchauffeur 14, que la sortie 11b dudit premier convertisseur soit reliée à l'entrée 12a du deuxième convertisseur 12 à travers un deuxième condenseur à soufre 15 puis un deuxième réchauffeur 16 et que la sortie 12b dudit deuxième convertisseur soit connectée à l'entrée 17a d'un troisième condenseur à soufre 17 possédant une sortie 17b pour les gaz constituant la sortie de l'usine à soufre.

L'unité d'épuration catalytique 3 comporte deux réacteurs catalytiques 18 et 19 montés en parallèle et possédant chacun, d'une part, un conduit d'entrée pour le gaz à épurer, respectivement 20 et 21, ledit conduit d'entrée étant muni d'une vanne, respectivement 20a et 21a, et un conduit d'injection, respectivement 22 et 23, d'un gaz de régénération et de refroidissement, ledit conduit d'injection étant muni d'une vanne, respectivement 22a et 23a, et, d'autre part, un conduit de sortie du gaz épuré, respectivement 24 et 25, ledit conduit de sortie étant muni d'une vanne respectivement 24a et 25a, et un conduit d'évacuation, respectivement 26 et 27, d'un effluent de régénération et de refroidissement, ledit conduit d'évacuation étant muni d'une vanne, respectivement 26a et 27a. Les conduits d'entrée, respectivement 20 et 21, des réacteurs catalytiques 18 et 19 sont connectés, à travers les vannes correspondantes 20a et 21a, à un conduit 28 constituant l'entrée de l'unité d'épuration catalytique 3. De même, les conduits de sortie, respectivement 24 et 25, desdits réacteurs catalytiques 18 et 19 sont connectés, à travers les vannes correspondantes 24a et 25a, à un conduit 29 constituant la sortie de l'unité d'épuration catalytique 3. Dans chacun des réacteurs catalytiques 18 et 19, les orifices des conduits d'entrée et d'injection sont séparés des orifices des conduits de sortie et d'évacuation par un lit fixe d'un catalyseur CLAUS. Les conduits d'injection 22 et 23 des réacteurs 18 et 19 sont montés en parallèle, à travers les vannes correspondantes 22a et 23a, à l'une des extrémités 30a d'un conduit 30 de circulation d'un gaz de régénération et de refroidissement et les conduits d'évacuation 26 et 27 desdits réacteurs sont également montés en parallèle à l'autre extrémité 30b dudit conduit 30. Sur ce conduit 30 sont montés, en allant de son extrémité 30b à son extrémité 30a, un condenseur à soufre 31, une soufflante 32, une vanne 33, un réchauffeur 34 et une dérivation 35 pourvue d'une vanne 35a, les extrémités de ladite dérivation débouchant dans le conduit 30, l'une entre la soufflante 32 et la vanne 33 et l'autre en aval du réchauffeur 34. La soufflante 32 est montée sur le circuit 30 de telle sorte que l'orifice d'aspiration de cette dernière soit relié au condenseur à soufre 31. Le conduit 29 formant la sortie de l'unité d'épuration 3 est connecté par un conduit 45 à l'incinérateur 4, lui-même relié, par un conduit 46, à la cheminée 5. En outre, une première tubulure, non représentée, relie le conduit 38, amenant le gaz résiduaire hydrolysé et refroidi à l'unité d'épuration, au circuit 30, en un point de ce dernier situé entre le condenseur 31 et la soufflante 32, et une deuxième tubulure, également non représentée, connecte ledit conduit 38, en aval du point de jonction de ce conduit 38 avec la première tubulure, au conduit 30 en un point de ce dernier situé entre la soufflante 32 et la vanne 33.

Le réacteur 2 d'hydrolyse comporte une entrée 2a et une sortie 2b séparées l'une de l'autre par un lit fixe d'un catalyseur d'hydrolyse. La sortie 17b de l'usine à soufre 1 est connectée par un conduit 36, à travers un réchauffeur 37 du type échangeur indirect de chaleur, à l'entrée 2a du réacteur d'hydrolyse et la sortie 2b dudit réacteur est connectée par un conduit 38, à travers un système de refroidissement 39 du type échangeur indirect de chaleur, au conduit 28 formant l'entrée de l'unité d'épuration.

Un analyseur 40, par exemple du type spectromètre interférentiel, est monté en dérivation sur le conduit 38 en aval du système de refroidissement 39, ledit analyseur étant agencé pour déterminer les teneurs molaires en H₂S et SO₂ du gaz circulant dans le conduit 38 et pour fournir un signal 41 représentatif de la valeur instantanée du rapport molaire H₂S : SO₂ dans ledit gaz. Le signal 41 est amené à un calculateur 42, qui élabore un signal 43 représentatif du débit d'air de correction pour ramener la valeur instantanée du rapport molaire H₂S : SO₂ à une valeur de consigne, ledit signal 43 étant appliqué à un régulateur de débit 44, qui règle l'ouverture de la vanne 10, ce qui assure l'ajustement du débit d'air introduit dans l'usine à soufre par le conduit 9.

Le déroulement du procédé dans cette installation peut être schématisé comme suit.

On suppose que le réacteur 18 est en phase de réaction et que le réacteur 19 est en phase de régénération, les vannes 20a, 24a, 23a, 27a et 33 étant ouvertes tandis que les vannes 21a, 22a, 25a, 26a et 35a sont fermées.

Dans l'usine à soufre 1, le gaz acide renfermant H₂S introduit, par le conduit 9, dans le brûleur 7 de la chambre de combustion 6 subit une combustion partielle avec formation d'un effluent gazeux renfermant H₂S et SO₂ et du soufre élémentaire. Cet effluent, après séparation du soufre qu'il contient dans le premier condenseur à soufre 13, est réchauffé dans le premier réchauffeur 14 et passe dans le premier convertisseur 11. Au contact du catalyseur CLAUS contenu dans ce convertisseur, les composés H₂S et SO₂ présents dans l'effluent gazeux réagissent pour former du soufre. Le mélange réactionnel issu du convertisseur 11, après séparation du soufre qu'il contient dans le deuxième condenseur 15 puis réchauffage dans le deuxième réchauffeur 16, passe dans le deuxième convertisseur 12 où une nouvelle quantité de soufre est formée par réaction catalytique entre H₂S et SO₂. Le mélange réactionnel issu du convertisseur 12 est débarrassé du soufre qu'il contient dans le troisième condenseur 17. Par la sortie 17b pour les gaz dudit condenseur, qui constitue la sortie de l'usine à soufre, on évacue un gaz résiduaire renfermant de la vapeur d'eau et, en quantité globale inférieure à 4 % en volume, des composés soufrés comprenant H₂S, SO₂, COS et/ou CS₂ ainsi qu'une très faible quantité de soufre vapeur et/ou vésiculaire.

Le gaz résiduaire issu de l'usine à soufre, après réchauffage à la température appropriée dans le réchauffeur 37, passe dans le réacteur d'hydrolyse 2, dans lequel les composés COS et CS₂ présents dans ledit gaz résiduaire sont hydrolysés en H₂S au contact du catalyseur contenu dans ledit réacteur 2. Par la sortie 2b du réacteur d'hydrolyse, on évacue un gaz résiduaire hydrolysé renfermant H₂S et SO₂ et substantiellement exempt de COS et CS₂. Le gaz résiduaire hydrolysé, après refroidissement à la température appropriée dans le système de refroidissement 39, est introduit par le conduit 38 dans le conduit 28 de l'unité d'épuration catalytique, qui constitue l'entrée de ladite unité.

Le gaz résiduaire hydrolysé passant par le conduit 28 est introduit dans le réacteur catalytique 18, dans lequel les composés H₂S et SO₂ contenus dans ledit gaz résiduaire réagissent l'un sur l'autre pour former du soufre. La température du courant gazeux amené au contact du catalyseur CLAUS contenu dans le réacteur 18 est telle que le soufre formé se dépose sur le catalyseur. Par le conduit 24 du réacteur 18 sort un gaz résiduaire épuré à teneur extrêmement faible en composés soufrés, qui est dirigé, à travers la vanne 24a, le conduit 29 et le conduit 45, dans l'incinérateur 4, le gaz incinéré étant acheminé à la cheminée 5, par le conduit 46, pour être rejeté à l'atmosphère.

Un courant de gaz de balayage, véhiculé dans le circuit 30 de régénération sous l'action de la soufflante 32, est porté dans le réchauffeur 34 à la température requise pour la régénération du catalyseur CLAUS sur lequel le soufre s'est déposé. Le courant de gaz réchauffé est introduit dans le réacteur 19 par le conduit 23 à travers la vanne 23a et balaie le catalyseur CLAUS chargé de soufre contenu dans ledit réacteur. Le courant de gaz de balayage entraînant le soufre vaporisé sort du réacteur 19 par le conduit 27 et s'écoule, à travers la vanne 27a, et le conduit 30 jusqu'au condenseur à soufre 31, dans lequel la majeure partie du soufre se sépare par condensation. A la sortie du condenseur 31, le courant de gaz de balayage est repris par la soufflante 32 pour être refoulé à l'entrée du réacteur 19 à travers le réchauffeur 34. Après une durée suffisante de balayage du catalyseur contenu dans le réacteur 19 par le gaz de balayage chaud issu du réchauffeur 34 pour éliminer complètement le soufre déposé sur le catalyseur et ainsi régénérer ledit catalyseur, on ouvre la vanne 35a et ferme la vanne 33 de manière à court-circuiter le réchauffeur 34 et à abaisser la température du gaz de balayage à une valeur inférieure à 160°C environ et l'on poursuit le balayage pendant une durée suffisante pour refroidir le catalyseur régénéré contenu dans le réacteur 19. Lorsque ledit catalyseur a été refroidi à une température convenable permettant la mise en contact du catalyseur avec le courant gazeux en provenance du réacteur 2 d'hydrolyse, on permute les rôles joués par les réacteurs 18 et 19, c'est-à-dire qu'on amène le réacteur 19 en phase de réaction CLAUS et le réacteur 18 en phase de régénération/refroidissement. Pour ce faire, on ferme les vannes 20a, 23a, 24a, 27a et 35a et ouvre les vannes 21a, 22a, 25a, 26a et 33, puis au stade du refroidissement on ferme la vanne 33 et ouvre la vanne 35a. Pendant la période transitoire de permutation du rôle des réacteurs 18 et 19, on amène le gaz de balayage à circuler dans un conduit non représenté bipassant lesdits réacteurs. Le gaz de balayage circulant dans le circuit 30 est prélevé, par la première tubulure, sur le gaz résiduaire hydrolysé refroidi amené à l'unité d'épuration catalytique par le conduit 38. La deuxième tubulure permet d'effectuer toute purge nécessaire du circuit 30.

L'analyseur 40 du système de régulation constitué par ledit analyseur, le calculateur 42 et le régulateur de débit 44, détermine en continu les teneurs molaires en H₂S et SO₂ du gaz résiduaire hydrolysé, qui passe dans le conduit 38 en aval du système de refroidissement 39 disposé à la suite du réacteur 2 d'hydrolyse, et délivre un signal 41 représentatif de la valeur instantanée du rapport molaire H₂S : SO₂ dans ledit gaz résiduaire. A partir du signal 41, le calculateur 42 élabore un signal 43 représentatif du débit de correction de l'air injecté dans l'usine à soufre pour ramener la valeur instantanée du rapport molaire H₂S : SO₂ dans le gaz résiduaire entrant dans l'unité 3 d'épuration catalytique à la valeur de consigne 2 : 1. En réponse au signal 43 qu'il reçoit du calculateur 42, le régulateur 44 règle l'ouverture de la vanne 10 montée sur le conduit 9 d'amenée d'air à l'usine à soufre 1 et fait ainsi varier le débit d'air, introduit dans ladite usine à soufre, d'une quantité qui permet de maintenir à la valeur de consigne le rapport molaire H₂S : SO₂ dans le gaz résiduaire admis dans l'unité 3 d'épuration catalytique.

Pour compléter la description qui vient d'être donnée du procédé selon l'invention, on donne ci-après, à titre non limitatif, un exemple de mise en oeuvre dudit procédé.

### EXEMPLE :

En faisant appel à une installation analogue à celle qui est schématisée sur la figure du dessin annexé et fonctionne comme décrit précédemment, on produisait du soufre à partir d'un gaz acide renfermant, en volume, 70,1 % d'H₂S, 5 % d'H₂O, 24,4 % de CO₂, 0,3 % de CH₄ et 0,2 % d'alcanes linéaires en C₆-C₇.

Le catalyseur placé dans le réacteur 2 d'hydrolyse consistait en extrudés, de 4 mm de diamètre, d'oxyde de titane renfermant 10 % en poids de sulfate de calcium.

Le catalyseur CLAUS présent dans les convertisseurs catalytiques 11 et 12 de l'usine à soufre 1 ainsi que dans les réacteurs 18 et 19 de l'unité 3 d'épuration catalytique était formé de billes, de 2 à 5 mm de diamètre, d'une alumine présentant une aire spécifique d'environ 240 m²/g.

Dans l'usine à soufre 1, la chambre de combustion 6 et les convertisseurs catalytiques 11 et 12 opéraient à des températures égales respectivement à environ 1100°C, 300°C et 250°C.

A la sorite 17b de l'usine à soufre, on évacuait un gaz résiduaire ayant une température de 142°C et une pression absolue de 1,15 bars.

Ce gaz résiduaire avait la composition suivante en pourcentage en volume, hors soufre vapeur et vésiculaire.

| | |
|---|---|
| N₂ | 54,84 |
| H₂O | 30,54 |
| H₂ | 2,26 |
| CO | 0,97 |
| CO₂ | 10,08 |
| H₂S | 0,74 |
| SO₂ | 0,45 |
| COS | 0,08 |
| CS₂ | 0,04 |

Le rendement de récupération de soufre de l'usine à soufre 1 était égal à 95,1 %.

Le gaz résiduaire évacué de l'usine à soufre était porté à 300°C dans le réchauffeur 37, puis entrait dans le réacteur 2 d'hydrolyse opérant à cette température. Le temps de séjour du gaz résiduaire au contact du catalyseur contenu dans le réacteur d'hydrolyse était égal à 3 secondes dans les conditions normales de pression et de température.

Le gaz résiduaire hydrolysé sortant du réacteur 2 ne renfermait plus que des traces de COS et CS₂, le taux d'hydrolyse desdits composés étant supérieur à 99 %.

Le gaz résiduaire hydrolysé était refroidi à 132°C par passage dans le système de refroidissement 39, puis était injecté, à cette température et avec un rapport molaire H₂S : SO₂ maintenu à la valeur 2 : 1 par le système de régulation, dans celui des réacteurs catalytiques 18 et 19 de l'unité 3 d'épuration catalytique fonctionnant en phase de réaction CLAUS. Par le conduit 29, connecté à la sortie dudit réacteur et formant la sortie de l'unité 3 d'épuration catalytique, on évacuait un gaz résiduaire épuré ayant une température d'environ 145°C et renfermant une teneur globale en produits soufrés égale à 1200 p.p.m. en volume, ledit gaz épuré étant acheminé vers l'incinérateur 4 par le conduit 45. L'incinération avait lieu à 450°C par combustion d'un gaz combustible avec un léger excès d'air conduisant à 1 % en volume d'oxygène dans le gaz incinéré envoyé à la cheminée.

Le gaz de balayage utilisé pour la régénération du catalyseur chargé de soufre contenu dans le réacteur en phase de régénération puis refroidissement était constitué d'une partie du gaz résiduaire hydrolysé refroidi prélevée sur le conduit 38 par la première tubulure et était introduit dans le réacteur en phase de régénération après avoir été amené à une température comprise entre 300°C et 350°C dans le réchauffeur 34 du circuit de régénération. Le gaz de balayage chargé de soufre issu du réacteur en phase de régénération passait ensuite dans le condenseur à soufre 31 du circuit de régénération, pour y être refroidi à environ 125°C de manière à séparer par condensation la plus grande partie du soufre qu'il contenait, puis retournait au réchauffeur 34 pour être réutilisé pour la régénération. Le catalyseur régénéré était ensuite refroidi à la température d'environ 130°C en faisant passer dans le réacteur le contenant le gaz de balayage issu du condenseur 31 et circulant dans la dérivation 35 court-circuitant le réchauffeur 34.

Les réacteurs catalytiques 18 et 19 opéraient alternativement pendant 30 heures en phase d'épuration, c'est-à-dire en phase de réaction, et pendant 30 heures, dont 10 heures de refroidissement, en phase de régénération/refroidissement.

Le rendement en soufre de l'ensemble comportant l'usine à soufre, l'étape d'hydrolyse suivant l'invention et l'unité d'épuration catalytique était égal à 99,6 %.

Dans des conditions opératoires comparables, le rendement en soufre de l'ensemble comportant seulement l'usine à soufre et l'unité d'épuration catalytique était égal à 99,1 %.

## Revendications

1. Procédé pour améliorer le rendement en soufre d'un ensemble produisant du soufre à partir d'un gaz acide renfermant H₂S, ledit ensemble comportant, d'une part, une usine à soufre, dans laquelle on introduit ledit gaz acide ainsi qu'une quantité contrôlée d'un gaz renfermant de l'oxygène libre et l'on effectue une oxydation ménagée de l'H₂S du gaz acide au moyen de l'oxygène du gaz renfermant de l'oxygène libre pour produire du soufre et en sortie de laquelle on évacue un gaz résiduaire renfermant de la vapeur d'eau et, en quantité globale comprise entre 0,2 et 4% en volume, des composés soufrés comprenant H₂S, SO₂ et au moins l'un des dérivé COS et CS₂, et, d'autre part, une unité d'épuration, dans laquelle on fait passer le gaz résiduaire et amène les composés H₂S et SO₂ qu'il renferme à réagir entre eux pour former du soufre, ladite réaction étant effectuée à une température inférieure au point de rosée du soufre formé, et obtenir en sortie de ladite unité un gaz résiduaire épuré, ledit procédé étant du type dans lequel on produit le gaz résiduaire introduit dans l'unité d'épuration en mettant en contact le gaz résiduaire issu de l'usine à soufre avec un catalyseur d'hydrolyse des composés COS et CS₂ opérant à une température suffisante pour produire un gaz résiduaire hydrolysé renfermant H₂S et SO₂ et substantiellement exempt de COS et CS₂ et en amenant le gaz résiduaire hydrolysé à la température requise pour son passage dans l'unité d'épuration et se caractérisant en ce que l'on maintient à la valeur 2:1 le rapport molaire H₂S:SO₂ dans le gaz résiduaire hydrolysé entrant dans ladite unité d'épuration en faisant varier le rapport des débits de gaz acide et de gaz renfermant de l'oxygène libre introduits dans l'usine à soufre.

2. Procédé selon la revendication 1, caractérisé en ce que la mise en contact du gaz résiduaire issu de l'usine à soufre avec le catalyseur d'hydrolyse est réalisée entre 180°C et 400°C et de préférence entre 250°C et 350°C.

3. Procédé selon la revendication 1 ou 2, caractérisé en ce que le temps de séjour du gaz résiduaire issu de l'usine à soufre au contact du catalyseur d'hydrolyse, exprimé dans les conditions standards de pression et de température, est compris entre 0,5 et 10 secondes et va de préférence de 1 à 5 secondes.

4. Procédé selon l'une des revendications 1 à 3, caractérisé en ce que le catalyseur d'hydrolyse renferme au moins 50 % en poids et plus particulièrement au moins 90 % en poids d'alumine activée.

5. Procédé selon la revendication 4, caractérisé en ce que le catalyseur d'hydrolyse est une alumine activée.

6. Procédé selon la revendication 4 ou 5, caractérisé en ce que le catalyseur d'hydrolyse à base d'alumine a une surface spécifique, déterminée par la méthode BET, allant de 100 m²/g à 400 m²/g et de préférence de 150 ma/g à 350 m²/g et un volume poreux total, déterminé par la méthode de pénétration au mercure, compris entre 0,1 et 1,2 cm³/g et de préférence entre 0,3 et 1 cm³/g.

7. Procédé selon l'une des revendications 1 à 3, caractérisé en ce que le catalyseur d'hydrolyse résulte de l'association d'au moins un composé d'un métal choisi parmi Fe, Ni, Co, Cu, Zn, Cr et Mo avec un support d'alumine ou/et de silice.

8. Procédé selon l'une des revendications 1 à 3, caractérisé en ce que le catalyseur d'hydrolyse renferme de l'oxyde de titane.

9. Procédé selon l'une des revendications 1 à 3, caractérisé en ce que le catalyseur d'hydrolyse renferme de l'oxyde de titane et un sulfate d'un métal alcalino-terreux choisi parmi Ca, Sr, Ba et Mg.

10. Procédé selon la revendication 9, caractérisé en ce que le rapport de la proportion pondérale d'oxyde de titane, exprimée en TiO₂, à la proportion pondérale de sulfate alcalino-terreux dans le catalyseur calciné va de 99 : 1 à 60 : 40 et de préférence de 99 : 1 à 80 : 20.

11. Procédé selon l'une des revendications 8 à 10, caractérisé en ce que le catalyseur d'hydrolyse renfermant de l'oxyde de titane présente une surface spécifique, mesurée par le méthode BET, comprise entre 5m²/g et 300 m²/g et de préférence entre 10 m²/g et 240 m²/g et un volume poreux total, déterminé par la méthode de pénétration au mercure, compris entre 0,05 et 0,6 cm³/g et de préférence entre 0,1 et 0,4 cm³/g.

12. Procédé selon l'une des revendications 1 à 11, caractérisé en ce que le maintien du rapport molaire H₂S : SO₂ à la valeur 2 : 1 dans le gaz résiduaire hydrolysé refroidi introduit dans l'unité d'épuration est réalisé en maintenant constant le débit de gaz acide introduit dans l'usine à soufre et en faisant varier le débit de gaz renfermant de l'oxygène libre introduit dans ladite usine à soufre.

13. Procédé selon la revendication 12, caractérisé en ce que le maintien dudit rapport molaire H₂S : SO₂ à la valeur 2 : 1 est réalisé en analysant le gaz résiduaire hydrolysé refroidi introduit dans l'unité d'épuration pour en déterminer les teneurs molaires en H₂S et SO₂ et en produisant à partir desdites teneurs une grandeur représentative de la valeur instantanée dudit rapport molaire H₂S : SO₂, puis en élaborant une grandeur représentative du débit de correction du gaz renfermant de l'oxygène libre pour ramener ladite valeur instantanée à la valeur 2 : 1 et en utilisant la grandeur ainsi élaborée pour ajuster le débit du gaz renfermant de l'oxygène libre introduit dans l'usine à soufre, cet ajustement de débit étant opéré soit sur la totalité du débit de gaz renfermant de l'oxygène libre ou seulement sur un débit additionnel faible s'ajoutant à un débit principal plus important proportionnel à la quantité d'H₂S présent dans le gaz acide.

## Claims

1. A method of improving the sulphur output from a complex for producing sulphur from an acid gas containing H₂S, the said complex comprising on the one hand a sulphur plant into which the said acid gas is introduced together with a controlled quantity of a gas containing free oxygen and a controlled oxidation of the H₂S in the acid gas is carried out by means of the oxygen in the gas containing free oxygen in order to produce sulphur and at the output from which a residual gas is drawn off which contains water vapour and in a total quantity comprised between 0.2 and 4% by volume, sulphurous compounds comprising H₂S, SO₂ and at least one of the COS and CS₂ derivatives and on the other a purification unit through which the residual gas is passed, causing the compounds H₂S and SO₂ which it contains to react with one another to form sulphur, the said reaction being carried out at a temperature below the dewpoint of the sulphur formed, a purified residual gas being obtained at the output from the said unit, the said process being of the type in which the residual gas introduced into the purification unit is produced by bringing the residual gas emanating from the sulphur plant into contact with a catalyst for hydrolysing the COS and CS₂ compounds and operating at a sufficient temperature to produce a hydrolysed residual gas containing H₂S and SO₂ and substantially free from COS and CS₂, the hydrolysed residual gas being brought to the required temperature for it to pass through the purification unit and being characterised in that the molar ratio of H₂S:SO₂ in the hydrolysed residual gas entering the said purification unit being maintained at 2:1 by varying the ratio of the rates of flow of acid gas and of gas containing free oxygen which are introduced into the sulphur plant.

2. A method according to Claim 1, characterised in that bringing the residual gas emanating from the sulphur plant into contact with the hydrolysing catalyst is carried out at between 180°C and 400°C and preferably between 250° and 350°C.

3. A method according to Claim 1 or 2, characterised in that the dwell time of the residual gas emanating from the sulphur plant in contact with the hydrolysing catalyst, expressed in the standard conditions of pressure and temperature, is comprised between 0.5 and 10 seconds and will preferably range from 1 to 5 seconds.

4. A method according to one of Claims 1 to 3, characterised in that the hydrolysing catalyst contains at least 50% by weight and more particularly at least 90% by weight of activated alumina.

5. A method according to Claim 4, characterised in that the hydrolysing catalyst is an activated alumina.

6. A method according to Claim 4 or 5, characterised in that the alumina-based hydrolysing catalyst has a specific surface area determined by the BET method which ranges from 100 m²/g to 400 m²/g and preferably from 150 m²/g to 350 m²/g and a total pore volume determined by the mercury penetration method, comprised between 0.1 and 1.2 cm³/g and preferably between 0.3 and 1 cm³/g.

7. A method according to one of Claims 1 to 3, characterised in that the hydrolysing catalyst results from the association of at least one compound of a metal chosen from Fe, Ni, Co, Cu, Zn, Cr and Mo with an alumina and/or silica carrier.

8. A method according to one of Claims 1 to 3, characterised in that the hydrolysing catalyst contains titanium oxide.

9. A method according to one of Claims 1 to 3, characterised in that the hydrolysing catalyst contains titanium oxide and a sulphate of an alkaline earth metal chosen from Ca, Sr, Ba and Mg.

10. A method according to Claim 9, characterised in that the ratio of the proportion by weight of titanium oxide expressed as TiO₂, to the proportion by weight of alkaline earth sulphate in the calcined catalyst, ranges from 99:1 to 60:40 and preferably from 99:1 to 80:20.

11. A method according to one of Claims 8 to 10, characterised in that the hydrolysing catalyst containing titanium oxide has a specific surface area, measured by the BET method, comprised between 5 m²/g and 300 m²/g and preferably between 10 m²/g and 240 m²/g and a total pore volume determined by the mercury penetration method comprised between 0.05 and 0.6 cm³/g and preferably between 0.1 and 0.4 cm³/g.

12. A method according to one of Claims 1 to 11, characterised in that the molar ratio of H₂S:S₂O is maintained at 2:1 in the cooled hydrolysed residual gas introduced into the purification unit by maintaining constant the rate of acid gas flow introduced into the sulphur plant and varying the rate of flow of gas containing free oxygen which is introduced into the said sulphur plant.

13. A method according to Claim 12, characterised in that maintenance of the said molar ratio of H₂S:SO₂ at 2:1 is achieved by analysing the cooled hydrolysed residual gas which is introduced into the purification unit in order to determine its molar contents of H₂S and SO₂ and, on a basis of these contents, producing a magnitude which represents the value at any given moment of the said molar ratio H₂S:SO₂ and then processing a value representing the correcting rate of flow of the gas containing free oxygen in order to bring the said value at any given moment to the value 2:1 and using the value thus processed in order to adjust the rate of flow of gas containing free oxygen and introduced into the sulphur plant, this flow adjustment being carried out either on the total rate of flow of gas containing free oxygen or only a slight additional rate of flow which is added to a larger main rate of flow in proportion to the quantity of H₂S present in the acid gas.

## Patentansprüche

1. Verfahren zur Verbesserung der Schwefelausbeute einer Anlage, die ausgehend von einem H₂S enthaltenden sauren Gas Schwefel produziert, wobei die Anlage einerseits eine Schwefelerzeugungsanlage, der das saure Gas sowie eine kontrollierte Menge eines freien Sauerstoff enthaltenden Gases zugeführt werden, in der man mit Hilfe des Sauerstoffs des freien Sauerstoff enthaltenden Gases eine schonende Oxidation des H₂S des sauren Gases durchführt, um Schwefel zu erzeugen, und an deren Ausgang man ein Restgas abführt, das Wasserdampf und insgesamt etwa 0,2 bis 4 Volumenprozent Schwefelverbindungen umfaßt, die H₂S, SO₂ und wenigstens eines der Derivate COS und CS₂ enthalten, und andererseits eine Reinigungsanlage umfaßt, durch die das Restgas geführt wird und in der die in diesem enthaltenen Verbindungen H₂S und SO₂ miteinander zur Reaktion gebracht werden, um Schwefel zu bilden, wobei die Reaktion bei einer Temperatur unterhalb des Taupunktes des gebildeten Schwefels ausgeführt wird, und um am Ausgang der Anlage ein gereinigtes Restgas zu erhalten, wobei das Verfahren von der Art ist, bei der das in die Reinigungsanlage eingeführte Restgas erzeugt wird, indem man das aus der Schwefelerzeugungsanlage stammende Restgas mit einem Katalysator für die Hydrolyse der Verbindungen COS und CS₂ in Kontakt bringt, der bei einer Temperatur arbeitet, die ausreicht, um ein hydrolisiertes Restgas zu erzeugen, welches H₂S und SO₂ enthält und im wesentlichen frei von COS und CS₂ ist, und indem man das hydrolisierte Restgas auf die für den Durchgang in der Reinigungsanlage erforderliche Temperatur bringt, dadurch gekennzeichnet, daß das Molverhältnis H₂S : SO₂ in dem in die Reinigungsanlage eintretenden Restgas auf einem Wert 2:1 gehalten wird, indem man das Verhältnis der Durchflußmengen des sauren Gases und des freien Sauerstoff enthaltenden Gases, die in die Schwefelerzeugungsanlage eingeführt werden, variiert.

2. Verfahren nach Anspruch 1, dadurch gekennzeichnet, daß die Kontaktierung des aus der Schwefelerzeugungsanlage stammenden Restgases mit dem Hydrolysekatalysator zwischen 180°C und 400°C und vorzugsweise zwischen 250°C und 350°C durchgeführt wird.

3. Verfahren nach Anspruch 1 oder 2, dadurch gekennzeichnet, daß die Verweildauer des aus der Schwefelerzeugungsanlage stammenden Restgases im Kontakt mit dem Hydrolysekatalysator unter normalen Druck- und Temperaturbedingungen 0,5 bis 10 Sekunden und vorzugsweise 1 bis 5 Sekunden beträgt.

4. Verfahren nach einem der Ansprüche 1 bis 3, dadurch gekennzeichnet, daß der Hydrolysekatalysator wenigstens 50 Gewichtsprozent und insbesondere wenigstens 90 Gewichtsprozent aktivierte Tonerde enthält.

5. Verfahren nach Anspruch 4, dadurch gekennzeichnet, daß der Hydrolysekatalysator ein aktivierte Tonerde ist.

6. Verfahren nach Anspruch 4 oder 5, dadurch gekennzeichnet, daß der Hydrolysekatalysator auf Tonerdebasis eine nach der BET-Methode ermittelte spezifische Oberfläche zwischen 100 m²/g und 400 m²/g und vorzugsweise zwischen 150 m²/g und 350 m²/g und ein nach der Quecksilbereindringmethode bestimmtes Gesamtporenvolumen zwischen 0,1 und 1,2 cm³/g und vorzugsweise zwischen 0,3 und 1 cm³/g hat.

7. Verfahren nach einem der Ansprüche 1 bis 3, dadurch gekennzeichnet, daß der Hydrolysekatalysator durch Assoziation wenigstens einer Verbindung eines aus Fe, Ni, Co, Cu, Zn, Cr und Mo ausgewählten Metalls mit einem Träger aus Tonerde oder/und Kieselerde erhalten wird.

8. Verfahren nach einem der Ansprüche 1 bis 3, dadurch gekennzeichnet, daß der Hydrolysekatalysator Titanoxid enthält.

9. Verfahren nach einem der Ansprüche 1 bis 3, dadurch gekennzeichnet, daß der Hydrolysekatalysator Titanoxid und ein Sulfat eines Erdalkalimetalls enthält, welches unter Ca, Sr, Ba und Mg ausgewählt wird.

10. Verfahren nach Anspruch 9, dadurch gekennzeichnet, daß das Verhältnis des Gewichtsanteils an Titanoxid, ausgedrückt als TiO₂, zum Gewichtsanteil von Erdalkalisulfat im geglühten Katalysator 99:1 bis 60:40 und vorzugsweise 99:1 bis 80:20 beträgt.

11. Verfahren nach einem der Ansprüche 8 bis 10, dadurch gekennzeichnet, daß der Titanoxid enthaltende Hydrolysekatalysator eine nach der BET-Methode gemessene spezifische Oberfläche zwischen 5 m²/g und 300 m²/g und vorzugsweise zwischen 10 m²/g und 240 m²/g und ein nach der Quecksilbereindringmethode bestimmtes Gesamtporenvolumen zwischen 0,05 und 0,6 cm³/g und vorzugsweise zwischen 0,1 und 0,4 cm³/g hat.

12. Verfahren nach einem der Ansprüche 1 bis 11, dadurch gekennzeichnet, daß das Molverhältnis H₂S : SO₂ in dem in die Reinigungsanlage eingeführten gekühlten Restgas auf dem Wert 2:1 gehalten wird, indem man die Durchflußmenge des der Schwefelerzeugungsanlage zugeführten sauren Gases konstant hält und die Durchflußmenge des freien Sauerstoff enthaltenden Gases, welches in die Schwefelerzeugungsanlage eingeführt wird, variiert.

13. Verfahren nach Anspruch 12, dadurch gekennzeichnet, daß das Molverhältnis H₂S : SO₂ auf dem Wert 2:1 gehalten wird, indem man das in die Reinigungsanlage eingeführte hydrolisierte gekühlte Restgas analysiert, um dadurch die Molgehalte an H₂S und SO₂ zu bestimmen, indem man ausgehend von den Gehalten eine repräsentative Größe des momentanen Wertes des Molverhältnisses H₂S : SO₂ erzeugt, indem man dann eine repräsentative Größe der korrigierten Durchflußmenge des freien Sauerstoff enthaltenden Gases erarbeitet, um den momentanen Wert auf den Wert 2:1 zurückzuführen, und indem man die so erarbeitete Größe verwendet, um die Durchflußmenge des freien Sauerstoff enthaltenden, in die Schwefelerzeugungsanlage eingeführten Gases einzustellen, wobei diese Einstellung der Durchflußmenge entweder bei der gesamten Durchflußmenge des freien Sauerstoff enthaltenden Gases oder nur bei einer geringen zusätzlichen, sich einer wesentlicheren Hauptdurchflußmenge beimengenden Durchflußmenge vorgenommen wird, welche proportional zu der im sauren Gas vorhandenen H₂S-Menge ist.
